# EUROPEAN PATENT SPECIFICATION

(11) **EP 1 220 598 B1**
(45) Date of publication and mention of the grant of the patent: **02.05.2003**
(21) Application number: 00958327.9
(22) Date of filing: 31.07.2000
(51) Int. Cl.: A01F 11/06, A01F 12/44

(54) **SEPARATION UNIT FOR GRAIN HARVESTING**
TRENNEINHEIT FÜR GETREIDEERNTE
UNITE DE SEPARATION POUR MOISSON DE CEREALES

(30) Priority: 29.09.1999 GB 9922913
(43) Date of publication of application: 10.07.2002
(73) Proprietor: CLAAS Selbstfahrende Erntemaschinen GmbH, 33428 Harsewinkel (DE)
(72) Inventor: VISAGIE, Andrie, 9660 Bothaville (ZA)
(86) International application number: EP0007373
(87) International publication number: WO01022797

(56) References cited:
- WO-A-97/29628
- DE-C- 877 068
- GB-A- 1 297 988
- US-A- 3 348 780
- US-A- 5 017 177

## Description

This patent application refers to a separation unit for grain harvesting, comprising a rotor housing with a feeding zone, a separation zone and a discharge zone, sieve means arranged at least in said separation zone, a rotary driven separation rotor arranged in said housing, main sucking air flow stream generating means generating at least a main sucking air flow stream moving at least through the separation zone and the discharge zone, and a grain collecting element arranged in some distance towards the sieve means, and at least a part of the main sucking air flow stream is sucked from the space between the sieve means and the grain collecting element into the separation zone. Such separation units are used in combine harvesters.

Such a separation unit is known from WO-A-97/29628 (see also PCT/US 97/02432). Such separation unit can work satisfactory in dry conditions and for harvesting of maize. However, in more humid conditions or with different grain like wheat, barley, rice or other crops there might occur some clogging in the rotor housing or in the space between the sieve means and the grain collecting element. Also, the grain losses might increase in such conditions, and the cleaning grade of the grain might detoriate. This happens because the sucking blower at the end of the rotor housing does not only suck air through the housing itself, the blower also sucks an air flow stream through the sieve openings into the space between the sieve means and the grain collecting element. Unfortunately, this air stream is sucked in from openings which are arrangedsidewards and above of the rotor housing. Accordingly, the air flow stream which is sucked into the rotor housing is mainly sucked in through those sieve openings which are arranged on the sides and at the upper ends of the sieve grate. By this uneven distribution of air flow stream the sieve openings might be clogged, so that no more kernels can pass them. Additionally, with this uneven distribution the air flow stream is also not used to separate chaff from kernels which have already passed the sieve openings and are transported to the grain bin or a separate cleaning device. This limits the performance and throughput of the cleaning device of a combine harvester equipped with such separation unit.

Accordingly, it is the subject of this invention to improve the performance of the separation unit in more difficult conditions and to limit the disadvantages known from the separation unit described above.

In one embodiment of the invention, the function of the separation unit can be improved if one or more openings allow an air flow stream to enter the space between the sieve means and the grain collector element, and said openings are arranged in such locations that the direction of said air flow stream is substantially in cross or counter flow to the feeding direction of the grain moving through the space between the sieve means and the grain collecting element. This arrangement results in a more even distribution of the air flow stream, and by this arrangement the separating action is improved, because the air flow can blow chaff, straw and debris away from the grain kernels which have already passed the sieve openings, but which often are still mixed with fractions other than grain kernels. Such fractions can be sucked into the rotor housing and from there be sucked in and blown out by the blower. The sieve openings do not tend to clog, and the cleaning capacity is not occupied by chaff, straw and debris fractions. Now it is easier to achieve a good and even volume of air flow stream to pass trough the sieve openings into the rotor housing.

Because the grain kernels have a higher moving energy by their weight, the crossing or counter flowing air stream stops and feeds the lighter fraction of the harvested material away with it, whereas the heavier grain kernels are not substantially deviated by the air flow stream and they continue their way to the cleaning and storing means. If the grain collector element discharges the grain at one discharging end to move through the air, and at least one opening is arranged upstream behind said discharging end in relation to the transport path of the grain behind said discharging end so that at least a part of said air flow stream passes the transport path of the grain behind said discharging end, then there is a very effective separation of kernels from other chaff, straw and debris. If the grain collector element comprises openings which allow at least a part of said air flow stream to enter the space between the sieve means and the grain collector element, then such effect can also be achieved before the grain reaches the discharge end of the grain collection element. If the opening width of said openings is manually or drivingly adjustable by flaps, the speed and intensity can be varied and adapted to the crop to be harvested, the throughput and the other present working conditions.If a grain loss sensor senses the grain losses at the discharge end of the rotor housing and/or the main sucking air flow stream generating means, transmits the sensor signals to an electronic controller which computes a setting value for setting the drives of said flaps, and transmits setting signals to said drives, then the opening widths of said openings are automatically adjustable. If the main sucking air flow stream generating means generating at least a main sucking air flow stream are adjustable in their rotational speed or throughput capacity then the speed of the air flow stream is variable, so that it can also be adapted to the crop to be harvested, the throughput and the other present harvesting conditions.

In another embodiment of the invention, auxiliary air flow stream generating means generate an auxiliary air flow stream through the space between the sieve means and the grain collector element, openings allow an air flow stream to enter the space between the sieve means and the grain collector element and said openings are arranged in such locations that the direction of said air stream is substantially in cross or counter flow to the feeding direction of the grain moving through the space between the sieve means and the grain collecting element. If the main and auxiliary air flow stream generating means are represented by just one single element like a blower, a cheap and simple arrangement of the components of the separation unit can be achieved. The advantages described above for the improved designs described in the subclaims for the first embodiment also apply for the improvements described in the subclaims for the second embodiment. Further preferred embodiments of the invention are described in further subclaims.

The nature, objects and advantages of the invention will be more fully understood from the following description of a preferred embodiment of the invention shown by way of example in the accompanying drawings in which:
- Fig. 1: is a side elevation of the first embodiment of the separation unit,
- Fig. 2: is a side elevation of the second embodiment of the separation unit,

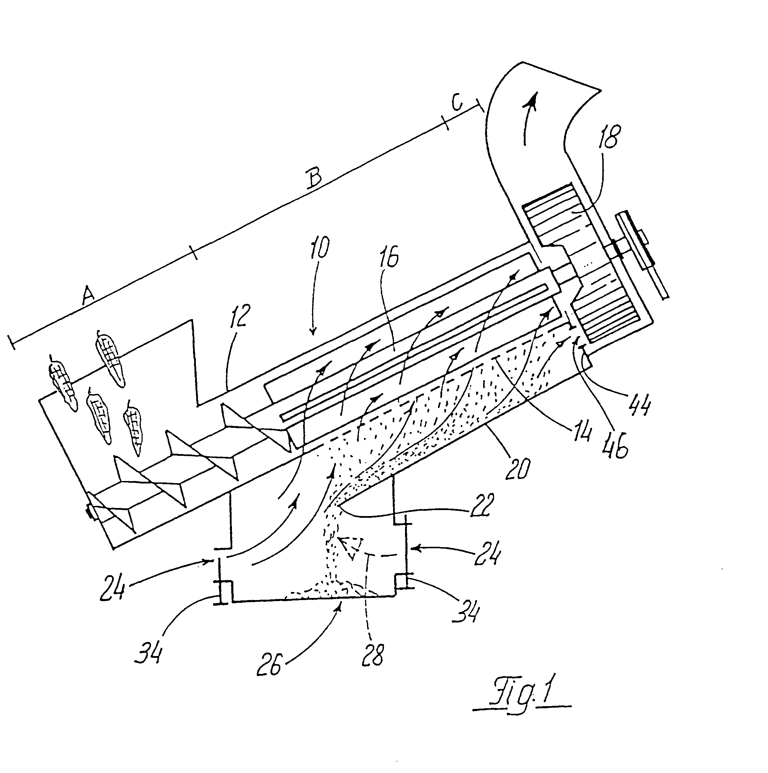

In Fig 1 there is shown a separation unit 10. It includes a rotor housing 12 with a feeding zone A, a separation zone B and a discharge zone C, sieve means 14 arranged at least in said separation zone B, a rotary driven separation rotor 16 arranged in said housing 12 , main sucking air flow stream generating means 18 generating at least a main sucking air flow stream moving at least through the separation zone B and the discharge zone C, a grain collecting element 20 arranged in some distance towards the sieve means 14. In action, crop is fed into the feeding zone A. The fractions of the different zones A, B, C along the length of a rotor housing can be adapted as required. Also the tools attached to the separation rotor 16 in the different zones A, B, C can be selected as required. By reason of simplicity, the feeding elements are not shown. In combine harvesters, for example, this is done by a feed rake arranged in a feeder housing, which receives cut crop from the cutterbar and distributes it towards the threshing elements. The separation unit 10 described now in more detail of course is also capable of threshing the grain and cleaning it, but for simplification it is only referred to as a separation unit 10. The separation rotor 16 beats the harvested crop and brings it into an rotational movement. The crop advances, because helical vanes (not shown) under the top of the rotor housing 12 push the crop forward under rotational movement. It also gets sucked towards the discharge zone C because of the sucking air flow stream generated by the main The faster the rotational movement of the crop layer alongside of the inner surface of the rotor housing is, the higher are the centrifugal forces acting upon it. Under such conditions, the grain kernels tend to leave the rotor housing 12 through openings in the sieve means 14, whereas the straw is too bulky to slip through these sieve openings.

However, together with the grain kernels also other fractions of the harvested good, such as chaff, broken straw particles and debris, which is small enough to slip through the sieve openings, tend to leave the rotor housing. Because such fractions have to be separated from the grain kernels later on to achieve a clean sample of harvested grain, it is advantageous to hinder such fractions from leaving the rotor housing 12 because then such material cannot occupy valuable cleaning capacity of the combine harvester. If such fractions are kept properly inside of the rotor housing 12, then in certain conditions a separate cleaning might even not be necessary. By sucking an air flow stream through the sieve openings into the rotor housing 12, the lighter fraction of material like chaff, broken straw or debris is sucked with the air flow stream into the center direction of the rotor housing 12. On the opposite, the grain kernels tending to leave the rotor housing have a high degree of moving energy, and by the air flow stream sucked through the sieve openings this moving energy cannot be substantially reduced. It is advantageous, if at least 10 % of the total air volume sucked through the rotor housing 12 is entering the rotor housing 12 through the openings in the sieve means14, but it can reach up to 100 % depending on the design of the combine harvester and the present working conditions. As a result, the grain kernels will leave the rotor housing 12 towards the space between the sieve means 14 and the grain collecting element 20. By this, a first cleaning of the different fractions of harvested good can be achieved. It can be prevented that chaff, broken straw and debris leaves the rotor housing 12 by sucking an air flow stream through the sieve openings. Due to the continuous air flow stream also the sieve openings are kept clean because the straw is kept away from the sieve openings and they cannot get hooked up in them. So all sieve openings are kept open for the passage of grain kernels.

Though this principle works well to avoid that too much chaff and debris leaves the rotor housing 12, there will always be some of such material entering the space between the sieve means 14 and the grain collecting element 20. Especially if the grain is still quite humid, chaff and broken straw sticks to the grain kernels, and the air flow stream at the sieve openings is not sufficient for a total cleaning. But also if the throughput capacity of the separation unit 10 is fully used, there is not much space left inside of the rotor housing 12, and the sucking air flow stream is not as effective as it is with a lower charge inside of the rotor housing 12. Then it becomes important that the air flow stream flowing through the space between the sieve means 14 and the grain collecting element 20 is used for further separation and cleaning.

This can be achieved by a useful arrangement of openings 24 through which the air flow stream is sucked into the space between the sieve means 14 and the grain collecting element 20. If such openings 24 are arranged more upstream of the direction of the air flow stream, there is a respectively long distance along which the air flow stream is moved substantially in counter flow or cross direction towards the direction of the grain kernels, which is effective for cleaning purposes. Such openings 24 can be arranged anywhere around the side walls of the space between the sieve means 14 and the grain collecting element 20, and an air flow stream can also be sucked in through the grain exit to a further cleaning device or the grain storage device. Because the space between the sieve means 14 and the grain collecting element 20 is not as occupied as within the rotor housing 12, a separation and cleaning of grain from chaff, broken straw and debris can be achieved more easily by the air flow stream.

The grain collecting element 20 should proceed the grain kernels towards a further cleaning process and storing in the grain bin. If the grain collecting element 20 is arranged inclined towards the ground in the machine, like a trough arranged underneath the rotor housing 12, the grain kernels move along on the surface of the grain collecting element 20 just by gravitational forces. Of course, the grain collecting element 20 can also be driven in oscillating movements, as this is known for grain pans in combine harvesters, or it can comprise an endlessly driven conveying belt. This would be beneficial, if the grain collecting element 20 is arranged substantially horizontal within a machine.

The grain collecting element 20 proceeds the collected grain towards its discharge end 22. At this discharge end 22, the flow of collected grain falls down through the air towards a collecting zone 26 where the pre-cleaned grain is distributed away for further cleaning and storing. The height distance the grain kernels fall down from the discharge end 22 to the collecting zone 26 can again be used for separating and cleaning purposes. This can be achieved if an opening 24 is arranged upstream of the air flow stream behind said discharging end 22 and also behind the transport path of the grain through the air so that at least a part of said air flow stream passes the transport path of the grain through the air. In Fig. 1, the right opening 24 is upstream of the air flow stream behind the discharging end 22 and the transport path of the grain trough the air, and the arrow 28 shown in broken lines indicates that the air flow stream is passing through the falling flow of grain kernels. There it can very effectively take the chaff, broken straw and debris fractions with it.

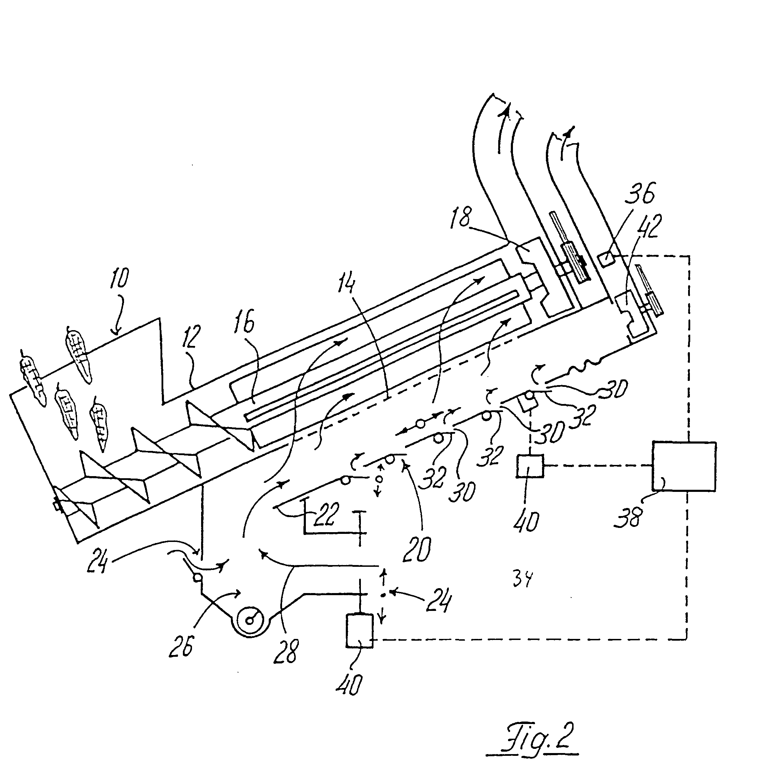

In Fig. 2, there are openings 30 in the grain collecting element 20 which allow an air flow stream pass through the grain collecting element 20 and the flow of grain kernels into the space between the sieve means 14 and the grain collecting element 20. By this, an air flow stream must pass a curtain of falling grain mixed up with chaff, broken straw and debris, and the air flow stream can separate and clean the grain from the other fractions.

To be able to adjust the air flow stream to the present working conditions the opening widths of the openings 24, 30 should be adjustable, for example by flaps 32 or shields 34. Such adjustment might become necessary due to different crops to be separated, more or less chaff or broken straw occuring, differences in throughput, different levels of humidity or other influencing factors. By differentiating between the opening levels of different flaps 32 and shields 34 an operator can distinctively influence the separating and cleaning function inside of his machine.

This adjustment can also be achieved or even be combined with an adjustment of the main sucking air flow stream generating means generating at least a main sucking air flow stream in their rotational speed or throughput capacity so that the speed of the air flow stream is variable.

If such adjustment is combined with a grain loss sensor 36, as it is known from combine harvesters, which is located in an appropriate position to measure grain losses, and such adjustment is automized by computers 38 and powered drives 40 for flaps 32 and shields 34, then it is possible to adjust the settings of flaps 32 and shields 34 and the rotational speeds and throughput of the air flow stream generating means on the go. This system then allows to achieve a working performance which is very close to the theoretical performance of the separation unit 10.

In Fig. 2 there is shown an auxiliary air flow stream generating means 42. The auxiliary air flow stream generating means 42 support the main air flow stream generating means 18 to suck air through the space between the sieve means 14 and the grain collecting element 20. Especially if the rotor housing 12 is packed with crop close to its maximum capacity it might prove to be beneficial to use an auxiliary air flow stream generating means 42 which maintains an air flow stream through the space between the sieve means 14 and the grain collecting element 20.

In an arrangement as claimed it is important that there are stop means for the grain kernels at the downstream end of the air flow stream in the rotor housing 12 and at the grain collecting element 20 because the sucking air flow stream reaches its highest speed there. Otherwise there might occur grain losses because grain kernels might get sucked out of the rotor housing or the space between the sieve means 14 and the grain colleting element 20. Such stop means attached to the downstream end of the rotor housing 12 could be helical vanes, whose effective front side is directed reversely against the axial feeding direction inside of the rotor housing. Such stop means attached to the grain element 20 could be a transversely arranged baffle plate 44 which still leaves a clearance 46 between the top of the baffle plate and the rotor housing 12 or the sieve means 14 respectively. Such clearance should be wide enough to allow chaff, broken straw and debris fractions which tend to wander along the bottom side of the sieve means downstream to leave the space between sieve means 14 and the grain collecting element 20, but also small enough to avoid that straw, chaff or debris get blown into this space by the blower 18, 42. This can be achieved, if the clearance is preferably between 10 and 50 mm, most preferably about 25 mm.

While preferred embodiments of the invention have been illustrated by way of example in the drawings and are herein particularly described, it will be recognized that many modifications may be made and that the invention is hence in no way limited to the illustrated embodiment. The described separation unit may be integrated into a stationary, pull-type or self-propelled combine harvester. It may be arranged inclined or horizontally, and it may be combined with any kind of cleaning technology known from the prior art.

## Claims

1. Separation unit (10) for grain harvesting, comprising a rotor housing (12) with a feeding zone (A), a separation zone (B) and a discharge zone (C), sieve means (14) arranged at least in said separation zone, a rotary driven separation rotor (16) arranged in said housing, main sucking air flow stream generating means generating (18) at least a main sucking air flow stream moving at least through the separation zone and the discharge zone, a grain collecting element (20) arranged in some distance towards the sieve means, and at least a part of the main sucking air flow stream is sucked from the space between the sieve means and the grain collecting element into the separation zone.
**characterized in**
**that** one or more openings (24) allow an air flow stream to enter the space between the sieve means and the grain collecting element, and said openings are arranged in such locations that the direction of said air flow stream is substantially in cross or counter flow to the feeding direction of the grain moving through the space between the sieve means and the grain collecting element.

2. Separation unit as claimed in claim 1,
**characterized in,**
**that** the grain collecting element discharges the grain at one discharging end to continue its transporting path through the air, and at least one opening is arranged upstream of the air flow stream behind said discharging end and also behind the transport path of the grain through the air so that at least a part of said air flow stream passes the transport path of the grain through the air.

3. Separation unit as claimed in claims 1 or 2,
**characterized in,**
**that** the grain collecting element comprises openings which allow at least a part of said air flow stream to enter the space between the sieve means and the grain collecting element.

4. Separation unit as claimed in one or more of the preceding claims,
**characterized in,**
**that** the opening width of said openings is manually or drivingly adjustable by flaps.

5. Separation unit according to claim 4,
**characterized in,**
**that** a grain loss sensor senses the grain losses at the discharge end of the rotor housing and/or the main sucking air flow stream generating means, transmits the sensor signals to an electronic controller which computes a setting value for setting the drives of said flaps, and transmits setting signals to said drives so that the opening widths of said openings are automatically adjustable.

6. Separation unit as claimed in one or more of the preceding claims,
**characterized in,**
**that** the main sucking air flow stream generating means generating at least a main sucking air flow stream are adjustable in their rotational speed or throughput capacity so that the speed of the air flow stream is variable.

7. Separation unit as claimed in one or more of the preceding claims,
**characterized in,**
**that** there are stop means for retaining grain kernels arranged inside downstream at the end in the rotor housing and/or at the downstream end of the grain collecting element in the space between the sieve means and the grain collecting element.

8. Separation unit as claimed in one or more of the preceding claims,
**characzterized in,**
**that** at the downstream end of the grain collecting element there is a baffle plate, and the clearance between the top of the baffle plate and the rotor housing and the sieve means respectively is between 10 mm and 50 mm, most preferably 25 mm.

9. Separation unit as claimed in one or more of the preceding claims,
**characterized in,**
**that** inside of the downstream end of the rotor housing there are helical vanes, whose effective front side is directed reversely against the axial feeding direction.

10. Separation unit for grain harvesting, comprising a rotor housing with a feeding zone, a separation zone and a discharge zone, sieve means arranged at least in said separation zone, a rotary driven separation rotor arranged in said housing, main sucking air flow stream generating means generating at least a main sucking air flow stream moving at least through the separation zone and the discharge zone, a grain collecting element arranged in some distance towards the sieve means,
**charcterized in,**
**that** auxiliary air flow stream generating means generate an auxiliary air flow stream through the space between the sieve means and the grain collecting element, openings allow an air flow stream to enter the space between the sieve means and the grain collecting element and said openings are arranged in such locations that the direction of said air stream is substantially in cross or counter flow to the feeding direction of the grain moving through the space between the sieve means and the grain collecting element.

11. Separation unit according to claim 10,
**characterized in,**
**that** the main air flow stream generating means and the auxiliary air flow stream generating means are provided by a single blower or fan common to both the main and the auxiliary air flow stream generating means.

12. Separation unit according to claim 10 or 11,
**characterized in,**
**that** the grain collecting element discharges the grain at one discharging end to move through the air, and at least one opening is arranged upstream behind said discharging end in relation to the transport path of the grain behind said discharging end so that at least a part of said air flow stream passes the transport path of the grain behind said discharging end.

13. Separation unit according to claim 11,
**characterized in,**
**that** that the grain collecting element comprises openings which allow at least a part of said air flow stream to enter the space between the sieve means and the grain collecting element.

14. Separation unit as claimed in the preceding claims 10 to 13,
**characterized in,**
**that** that the opening width of said openings is manually or drivingly adjustable by flaps.

15. Separation unit as claimed in claim 14,
**characterized in,**
**that** that a grain loss sensor senses the grain losses at the discharge end of the rotor housing and/or the main sucking air flow stream generating means, transmits the sensor signals to an electronic controller which computes a setting value for setting the drives of said flaps, and transmits setting signals to said drives so that the opening widths of said openings are automatically adjustable.

16. Separation unit as claimed in one or more of the preceding claims,
**characterized in,**
**that** the main sucking air flow stream generating means generating at least a main sucking air flow stream and/or the auxiliary sucking air flow stream generating means are adjustable in their rotational speed or throughput capacity so that the speed of the air flow stream is variable.

17. Separation unit as claimed in one or more of the preceding claims 10 to 16,
**characterized in,**
**that** there are stop means for retaining grain kernels arranged inside downstream at the end in the rotor housing and/or at the downstream end of the grain collecting element in the space between the sieve means and the grain collecting element.

18. Separation unit as claimed in one or more of the preceding claims 10 to 17,
characzterized in,
that at the downstream end of the grain collecting element there is a baffle plate, and the clearance between the top of the baffle plate and the rotor housing and the sieve means respectively is between 10 mm and 50 mm, most preferably 25 mm.

19. Separation unit as claimed in one or more of the preceding claims 10 to 17,
**characterized in,**
**that** inside of the downstream end of the rotor housing there are helical vanes, whose effective front side is directed reversely against the axial feeding direction.

## Patentansprüche

1. Trenneinheit (10) zum Ernten von Getreide, umfassend ein Rotorgehäuse (12) mit einer Zuführzone (A), einer Trennzone (B) und einer Ausstoßzone (C), Siebmittel (14), die wenigstens in der Trennzone angeordnet sind, einen drehbaren, angetriebenen Trennrotor (16), der in dem Gehäuse angeordnet ist, Hauptansaugluftstromerzeugungsmittel (18), die wenigstens einen Hauptansaugluftstrom erzeugen, der sich wenigstens durch die Trennzone und die Ausstoßzone bewegt, und ein Getreidesammelelement (20), das in einigem Abstand in Richtung des Siebmittels hin angeordnet ist, und wobei wenigstens ein Teil des Hauptansaugluftstroms vom Raum zwischen dem Siebmittel und dem Körnersammelelement in die Trennzone gesaugt wird,
**dadurch gekennzeichnet, dass**
es eine oder mehrere Öffnungen (24) einem Luftstrom ermöglichen, in den Raum zwischen dem Siebmittel und dem Körnersammelelement einzutreten, und die Öffnungen an solchen Stellen angeordnet sind, dass die Richtung des Luftstroms im Wesentlichen quer oder als Gegenstrom zur Förderrichtung des Getreides liegt, das sich durch den Raum zwischen dem Siebmittel und dem Körnersammelelement bewegt.

2. Trenneinheit nach Anspruch 1,
**dadurch gekennzeichnet, dass**
das Körnersammelelement das Getreide an einem Ausstoßende ausstößt, um dessen Förderweg durch die Luft fortzusetzen, und wenigstens eine Öffnung oben im Luftstrom hinter dem Ausstoßende und auch hinter dem Förderweg des Getreides durch die Luft angeordnet ist, so dass wenigstens ein Teil des Luftstroms durch den Förderweg des Getreides durch die Luft hindurchgeht.

3. Trenneinheit nach Anspruch 1 oder 2,
**dadurch gekennzeichnet, dass**
das Körnersammelelement Öffnungen umfasst, die es zulassen, dass wenigstens ein Teil des Luftstroms in den Raum zwischen dem Siebmittel und dem Körnersammelelement eintritt.

4. Trenneinheit nach einem oder mehreren der vorangehenden Ansprüche,
**dadurch gekennzeichnet, dass**
die Öffnungsweite der Öffnungen manuell oder mit Antrieb durch Klappen einstellbar ist.

5. Trenneinheit nach Anspruch 4,
**dadurch gekennzeichnet, dass**
ein Getreideverlustfühler die Getreideverluste am Ausstoßende des Rotorgehäuses und/oder des Hauptansaugluftstromerzeugungsmittels erfasst und die Fühlersignale an eine elektronische Steuerung überträgt, die einen Einstellwert zum Einstellen der Antriebe der Klappen berechnet und die Einstellungssignale an die Antriebe überträgt, so dass die Öffnungsweiten der Öffnungen automatisch angepasst werden.

6. Trenneinheit nach einem oder mehreren der vorangehenden Ansprüche,
**dadurch gekennzeichnet, dass**
die Hauptansaugluftstromerzeugungsmittel, die wenigstens einen Hauptansaugluftstrom erzeugen, in ihrer Drehgeschwindigkeit oder ihrer Luftdurchsatzkapazität einstellbar sind, so dass die Geschwindigkeit des Luftstroms veränderlich ist.

7. Trenneinheit nach einem oder mehreren der vorangehenden Ansprüche,
**dadurch gekennzeichnet, dass**
Auffangmittel zum Zurückhalten der Getreidekörner vorhanden sind, die innen im Durchfluss hinten am Ende im Rotorgehäuse und/oder am Durchfluss hinteren Ende des Körnersammelelements im Raum zwischen dem Siebmittel und dem Körnersammelelement angeordnet sind.

8. Trenneinheit nach einem oder mehreren der vorangehenden Ansprüche,
**dadurch gekennzeichnet, dass**
am von der Durchflussrichtung her gesehenen hinteren Ende des Körnersammelelements eine Sperrplatte vorhanden ist und der Spalt zwischen der Oberkante der Sperrplatte und dem Rotorgehäuse beziehungsweise dem Siebmittel zwischen 10 mm und 50 mm, am besten 25 mm beträgt.

9. Trenneinheit nach einem oder mehreren der vorangehenden Ansprüche,
**dadurch gekennzeichnet, dass**
sich im Inneren des von der Durchflussrichtung her gesehenen hinteren Ende des Rotorgehäuses Schraubenflügel befinden, deren wirksame Vorderseite der axialen Förderrichtung entgegengesetzt wirkend ausgerichtet ist.

10. Trenneinheit zum Ernten von Getreide, umfassend ein Rotorgehäuse mit einer Zuführzone, einer Trennzone und einer Ausstoßzone, Siebmittel, die wenigstens in der Trennzone angeordnet sind, einen drehbaren, angetriebenen Trennrotor, der in dem Gehäuse angeordnet ist, Hauptansaugluftstromerzeugungsmittel, die wenigstens einen Hauptansaugluftstrom erzeugen, der sich wenigstens durch die Trennzone und die Ausstoßzone bewegt, und ein Getreidesammelelement, das in einigem Abstand in Richtung des Siebmittels hin angeordnet ist,
**dadurch gekennzeichnet, dass**
Hilfsansaugluftstromerzeugungsmittel einen Hilfsluftstrom durch den Raum zwischen dem Siebmittel und dem Körnersammelelement erzeugen, Öffnungen es einem Luftstrom ermöglichen, in den Raum zwischen dem Siebmittel und dem Körnersammelelement einzutreten, und die Öffnungen an solchen Stellen angeordnet sind, dass die Richtung des Luftstroms im Wesentlichen quer oder als Gegenstrom zur Förderrichtung des Getreides liegt, das sich durch den Raum zwischen dem Siebmittel und dem Körnersammelelement bewegt.

11. Trenneinheit nach Anspruch 10,
**dadurch gekennzeichnet, dass**
die Hauptansaugluftstromerzeugungsmittel und die Hilfsansaugluftstromerzeugungsmittel durch ein einzelnes Gebläse oder einen Ventilator, das/der sowohl den Haupt- und dem Hilfsansaugluftstromerzeugungsmitteln gemeinsam ist, bereitgestellt werden.

12. Trenneinheit nach Anspruch 10 oder 11,
**dadurch gekennzeichnet, dass**
das Körnersammelelement das Getreide an einem Ausstoßende ausstößt, damit es sich durch die Luft bewegt, und wenigstens eine Öffnung oben im Luftstrom hinter dem Ausstoßende in Bezug auf den Förderweg der Getreidekörner angeordnet ist, so dass wenigstens ein Teil des Luftstromes durch den Förderweg des Getreides hinter dem Ausstoßende hindurchgeht.

13. Trenneinheit nach Anspruch 11,
**dadurch gekennzeichnet, dass**
das Körnersammelelement Öffnungen umfasst, die es wenigstens einem Teil des Luftstromes erlauben, in den Raum zwischen dem Siebmittel und dem Körnersammelelement einzutreten.

14. Trenneinheit nach Anspruch 10 bis 13,
**dadurch gekennzeichnet, dass**
die Öffnungsweite der Öffnungen manuell oder durch Antrieb durch Klappen einstellbar ist.

15. Trenneinheit nach Anspruch 14,
**dadurch gekennzeichnet, dass**
ein Getreideverlustfühler die Getreideverluste am Ausstoßende des Rotorgehäuses und/oder des Hauptansaugluftstromerzeugungsmittels erfasst und die Fühlersignale an eine elektronische Steuerung überträgt, die einen Einstellwert zum Einstellen der Antriebe der Klappen berechnet und die Einstellungssignale an die Antriebe überträgt, so dass die Öffnungsweiten der Öffnungen automatisch angepasst werden.

16. Trenneinheit nach einem oder mehreren der vorangehenden Ansprüche,
**dadurch gekennzeichnet, dass**
die Hauptansaugluftstromerzeugungsmittel, die wenigstens einen Hauptansaugluftstrom erzeugen, und/oder die Hilfsansaugluftstromerzeugungsmittel in ihrer Drehgeschwindigkeit oder ihrer Luftdurchsatzkapazität einstellbar sind, so dass die Geschwindigkeit des Luftstroms veränderlich ist.

17. Trenneinheit nach einem oder mehrerer der vorangehenden Ansprüche 10 bis 16,
**dadurch gekennzeichnet, dass**
Auffangmittel zum Zurückhalten der Getreidekörner vorhanden sind, die innen von der Durchflussrichtung her gesehenen hinten am Ende im Rotorgehäuse und/oder am von der Durchflussrichtung her gesehenen hinteren Ende des Körnersammelelements im Raum zwischen dem Siebmittel und dem Körnersammelelement angeordnet sind.

18. Trenneinheit nach einem oder mehreren der vorangehenden Ansprüche 10 bis 17,
**dadurch gekennzeichnet, dass**
am von der Durchflussrichtung her gesehenen hinteren Ende des Körnersammelelements eine Sperrplatte vorhanden ist und der Spalt zwischen der Oberkante der Sperrplatte und dem Rotorgehäuse beziehungsweise dem Siebmittel zwischen 10 mm und 50 mm, am besten 25 mm beträgt.

19. Trenneinheit nach einem oder mehreren der vorangehenden Ansprüche 10 bis 17,
**dadurch gekennzeichnet, dass**
sich im Inneren des von der Durchflussrichtung her gesehenen hinteren Endes des Rotorgehäuses Schraubenflügel befinden, deren wirksame Vorderseite der axialen Förderrichtung entgegengesetzt wirkend ausgerichtet ist.

## Revendications

1. Unité de séparation (10) pour moisson de céréales, comprenant une enveloppe (12) de rotor avec une zone d'alimentation (A), une zone de séparation (B) et une zone de déchargement (C), un moyen de tamisage (14) agencé au moins dans ladite zone de séparation, un rotor de séparation (16) entraîné en rotation, disposé dans ladite enveloppe, un moyen de génération de flux d'air d'aspiration principal générant (18) au moins un flux d'air d'aspiration principal qui traverse au moins la zone de séparation et la zone de déchargement, un élément de réception de grain (20) agencé à une certaine distance du moyen de tamisage, et au moins une partie du flux d'air d'aspiration principal est aspiré dans l'espace situé entre le moyen de tamisage et l'élément de réception de grain et introduit dans la zone de séparation,
**caractérisée en ce que** une ou plusieurs ouvertures (24) permettent à un flux d'air d'entrer dans l'espace situé entre le moyen de tamisage et l'élément de réception de grain, et lesdites ouvertures sont agencées en des emplacements qui font que la direction dudit flux d'air est sensiblement croisée ou à contre-courant par rapport à la direction d'alimentation du grain traversant l'espace situé entre le moyen de tamisage et l'élément de réception de grain.

2. Unité de séparation selon la revendication 1, **caractérisée en ce que** l'élément de réception de grain décharge le grain à une extrémité de déchargement pour prolonger son chemin de transport dans l'air, et au moins une ouverture est agencée en amont du flux d'air derrière ladite extrémité de déchargement et également derrière le chemin de transport du grain dans l'air de telle manière qu'au moins une partie dudit flux d'air passe dans le chemin de transport du grain dans l'air.

3. Unité de séparation selon la revendication 1 ou 2, **caractérisée en ce que** l'élément de réception de grain comprend des ouvertures qui permettent au moins à une partie dudit flux d'air d'entrer dans l'espace situé entre le moyen de tamisage et l'élément de réception de grain.

4. Unité de séparation selon l'une ou plusieurs des revendications précédentes, **caractérisée en ce que** la largeur d'ouverture desdites ouvertures est réglable, manuellement ou de manière motorisée, au moyen de volets.

5. Unité de séparation selon la revendication 4, **caractérisée en ce qu'**un capteur de pertes de grain mesure les pertes de grain au niveau de l'extrémité de déchargement de l'enveloppe de rotor et/ou au niveau du moyen de génération de flux d'air d'aspiration principal, transmet les signaux de capteur à un contrôleur électronique qui calcule une valeur de réglage pour régler les commandes desdits volets, et transmet des signaux de réglage auxdites commandes de sorte que les largeurs d'ouverture desdites ouvertures sont réglables automatiquement.

6. Unité de séparation selon l'une ou plusieurs des revendications précédentes, **caractérisée en ce que** le moyen de génération de flux d'air d'aspiration principal générant au moins un flux d'air d'aspiration principal est réglable en vitesse de rotation ou en capacité totale d'aspiration de sorte que la vitesse du flux d'air est variable.

7. Unité de séparation selon l'une ou plusieurs des revendications précédentes, **caractérisée en ce que** des moyens d'arrêt sont prévus pour retenir les grains, disposés à l'intérieur en aval à l'extrémité dans l'enveloppe de rotor et/ou à l'extrémité aval de l'élément de réception de grain dans l'espace situé entre le moyen de tamisage et l'élément de réception de grain.

8. Unité de séparation selon l'une ou plusieurs des revendications précédentes, **caractérisée en ce que**, au niveau de l'extrémité aval de l'élément de réception de grain, se trouve un déflecteur, et le jeu entre le sommet du déflecteur et l'enveloppe de rotor et le moyen de tamisage respectivement est compris entre 10 mm et 50 mm, de préférence 25 mm.

9. Unité de séparation selon l'une ou plusieurs des revendications précédentes, **caractérisée en ce que**, à l'intérieur de l'extrémité aval de l'enveloppe de rotor, se trouvent des aubes hélicoïdales, dont la face avant efficace est dirigée contre la direction d'alimentation axiale.

10. Unité de séparation pour moisson de céréales, comprenant une enveloppe de rotor avec une zone d'alimentation, une zone de séparation et une zone de déchargement, un moyen de tamisage agencé au moins dans ladite zone de séparation, un rotor de séparation entraîné en rotation, disposé dans ladite enveloppe, un moyen de génération de flux d'air d'aspiration principal générant au moins un flux d'air d'aspiration principal qui traverse au moins la zone de séparation et la zone de déchargement, un élément de réception de grain agencé à une certaine distance du moyen de tamisage,
**caractérisée en ce qu'**un moyen de génération de flux d'air auxiliaire génère un flux d'air auxiliaire traversant l'espace situé entre le moyen de tamisage et l'élément de réception de grain, des ouvertures permettent à un flux d'air d'entrer dans l'espace situé entre le moyen de tamisage et l'élément de réception de grain, et lesdites ouvertures sont agencées en des emplacements qui font que la direction dudit flux d'air est sensiblement croisée ou à contre-courant par rapport à la direction d'alimentation du grain traversant l'espace situé entre le moyen de tamisage et l'élément de réception de grain.

11. Unité de séparation selon la revendication 10, **caractérisée en ce que** le moyen de génération de flux d'air principal et le moyen de génération de flux d'air auxiliaire sont fournis par une seule soufflante commune aux moyens de génération de flux d'air principal et de flux d'air auxiliaire.

12. Unité de séparation selon la revendication 10 ou 11, **caractérisée en ce que** l'élément de réception de grain décharge le grain à une extrémité de déchargement pour le faire traverser l'air, et au moins une ouverture est agencée en amont derrière ladite extrémité de déchargement par rapport au chemin de transport du grain derrière ladite extrémité de déchargement de telle manière qu'au moins une partie dudit flux d'air passe dans le chemin de transport du grain derrière ladite extrémité de déchargement.

13. Unité de séparation selon la revendication 11, **caractérisée en ce que** l'élément de réception de grain comprend des ouvertures qui permettent au moins à une partie dudit flux d'air d'entrer dans l'espace situé entre le moyen de tamisage et l'élément de réception de grain.

14. Unité de séparation selon les revendications 10 à 13, **caractérisée en ce que** la largeur d'ouverture desdites ouvertures est réglable, manuellement ou de manière motorisée, au moyen de volets.

15. Unité de séparation selon la revendication 14, **caractérisée en ce qu'**un capteur de pertes de grain mesure les pertes de grain au niveau de l'extrémité de déchargement de l'enveloppe de rotor et/ou au niveau du moyen de génération de flux d'air d'aspiration principal, transmet les signaux de capteur à un contrôleur électronique qui calcule une valeur de réglage pour régler les commandes desdits volets, et transmet des signaux de réglage auxdites commandes de sorte que les largeurs d'ouverture desdites ouvertures sont réglables automatiquement.

16. Unité de séparation selon l'une ou plusieurs des revendications précédentes, **caractérisée en ce que** le moyen de génération de flux d'air d'aspiration principal générant au moins un flux d'air d'aspiration principal et/ou le moyen de génération de flux d'air auxiliaire sont réglables en vitesse de rotation ou en capacité totale d'aspiration de sorte que la vitesse du flux d'air est variable.

17. Unité de séparation selon l'une ou plusieurs des précédentes revendications 10 à 16, **caractérisée en ce que** des moyens d'arrêt sont prévus pour retenir les grains, disposés à l'intérieur en aval à l'extrémité dans l'enveloppe de rotor et/ou à l'extrémité aval de l'élément de réception de grain dans l'espace situé entre le moyen de tamisage et l'élément de réception de grain.

18. Unité de séparation selon l'une ou plusieurs des précédentes revendications 10 à 17, **caractérisée en ce que**, au niveau de l'extrémité aval de l'élément de réception de grain, se trouve un déflecteur, et le jeu entre le sommet du déflecteur et l'enveloppe de rotor et le moyen de tamisage respectivement est compris entre 10 mm et 50 mm, de préférence 25 mm.

19. Unité de séparation selon l'une ou plusieurs des précédentes revendications 10 à 17, **caractérisée en ce que**, à l'intérieur de l'extrémité aval de l'enveloppe de rotor, se trouvent des aubes hélicoïdales, dont la face avant efficace est dirigée contre la direction d'alimentation axiale.
